# EUROPEAN PATENT SPECIFICATION

(11) **EP 2 060 479 B1**
(45) Date of publication and mention of the grant of the patent: **07.07.2010**
(21) Application number: 07120994.4
(22) Date of filing: 19.11.2007
(51) Int. Cl.: B62J 15/00

(54) **Bicycle fender having an adjustable fastening structure**
Schutzblech für ein Fahrrad mit verstellbarer Befestigungsstruktur
Garde-boue de bicyclette ayant une structure de fixation réglable

(43) Date of publication of application: 20.05.2009
(73) Proprietor: Sunnywheel Industrial Co. Ltd., No. 50, San Yi St. Yihsing Tsun Hsiushui Hsiang Changhua (TW)
(72) Inventor: Hsu, Kuo-Chung, Changhua (TW)
(74) Representative: Viering, Jentschura & Partner

(56) References cited:
- EP-A- 0 691 262
- EP-A- 1 785 342
- DE-U1- 8 527 359
- DE-U1-202007 007 398
- DE-U1-202007 007 576
- FR-A- 944 200
- GB-A- 696 326

## Description

### BACKGROUND OF THE INVENTION

### 1. Field of the Invention

The present invention relates to a bicycle fender equipped with an adjustable fastening structure and particularly to bicycle fender that has an adjustable fastening structure adaptable to varying frame specifications to facilitate installation and adjustment.

### 2. Description of the Prior Art

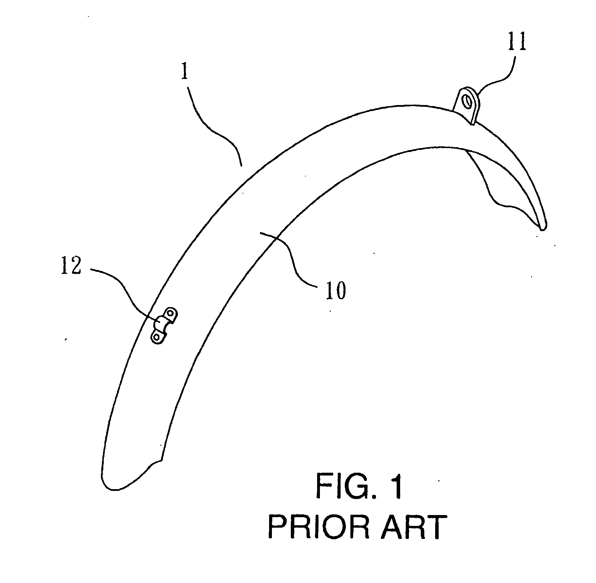

A conventional bicycle fender 1 (referring to FIG. 1) usually includes a plate 10 with one or more fastening elements 11 and 12 located at one side to allow the fender to be fastened to a bicycle frame. Such a structure has flaws in practice. Namely for different specifications the locations of the fastening elements 11 and 12 also are different. They are not interchangeable or adjustable. Hence bicycle manufacturers have to prepare different specifications of fenders. Not only the material cost increases significantly, installation also is not convenient.

EP-A-1 785 342 discloses a cable guide structure for cycles having an adjustable fastening structure comprising a fender body and one set of fastening elements. The fender body has a longitudinal slide track extended from a first end to a second end of the fender body. The fastening element has a retaining portion corresponding to and wedging in the longitudinal slide track to slide thereon. Furthermore, the fender body is connected to a bicycle frame by means of an attachment device which is different from fastening element and the longitudinal slide track.

### SUMMARY OF THE INVENTION

In view of the aforesaid problems, the present invention aims to provide a bicycle fender equipped with an adjustable fastening structure. The fender has a fender body and at least one set of fastening element. The fender body has at least one longitudinal slide track extended from a first end to a second end thereof. The fastening element has a retaining portion corresponding to and wedging in the longitudinal slide track, and slidable longitudinally on the slide track to allow the fastening location thereof on a bicycle frame to be adjusted as desired. Thus installation and adjustment are much easier.

In one aspect the longitudinal slide track of the fender body is formed with a dovetail cross section.

In another aspect the longitudinal slide track of the fender body is formed with a cross section of a bulged dovetail seat.

In yet another aspect the fender body has at least one wire duct.

In yet another aspect the fastening element includes a first member located close to the first end of the fender body to be fastened to the bicycle frame. The first member has a first retaining portion corresponding to and wedging in the longitudinal slide track. The first retaining portion is formed with a cross section in a shape of a dovetail seat or a dovetail trough.

In yet another aspect the fastening element includes a second member located between the first end and the second end of the fender body to be fastened to the bicycle frame. The second member has a second retaining portion corresponding to and wedging in the longitudinal slide track. The second retaining portion is formed with a cross section in a shape of a dovetail seat or a dovetail trough.

In yet another aspect the fastening element includes a third member located close to the second end of the fender body to be fastened to the bicycle frame. The third member has a third retaining portion corresponding to and wedging in the longitudinal slide track. The third retaining portion is formed with a cross section in a shape of a dovetail seat or a dovetail trough.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is a perspective view of a conventional fender.
FIG. 2 is a schematic view of an embodiment of the invention in a fastening condition.
FIG. 3 is an exploded view of the invention.
FIG. 4 is a cross section of a fender body.
FIG. 5 is a cross section taken on line I-I in FIG. 2.
FIG. 6 is a cross section taken on line II-II in FIG. 2.
FIG. 7 is a cross section taken on line III-III in FIG. 2.
FIG. 8 is a cross section taken on line IV-IV in FIG. 2.
FIG. 9 is a cross section of the invention formed with wire ducts.
FIG. 10 is a schematic view of another embodiment of the invention.
FIG. 11 is a cross section of another embodiment of the invention.
FIG. 12 is a cross section taken on line I-I in FIG. 2 according to another embodiment of the invention.
FIG. 13 is a cross section taken on line II-II in FIG. 2 according to another embodiment of the invention.
FIG. 14 is a cross section taken on line III-III in FIG. 2 according to another embodiment of the invention.
FIG. 15 is a cross section taken on line IV-IV in FIG. 2 according to another embodiment of the invention.

### DESCRIPTION OF THE PREFERRED EMBODIMENT

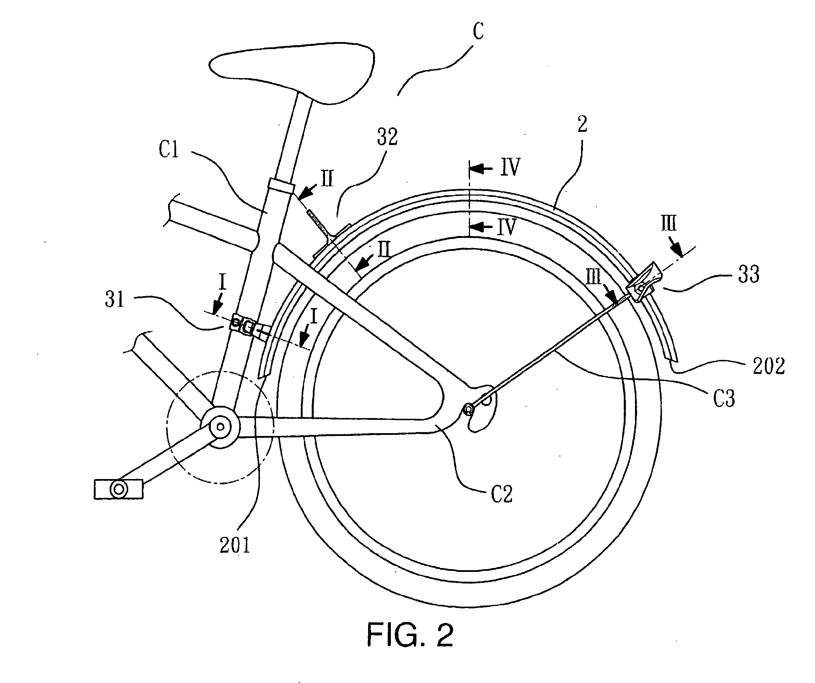

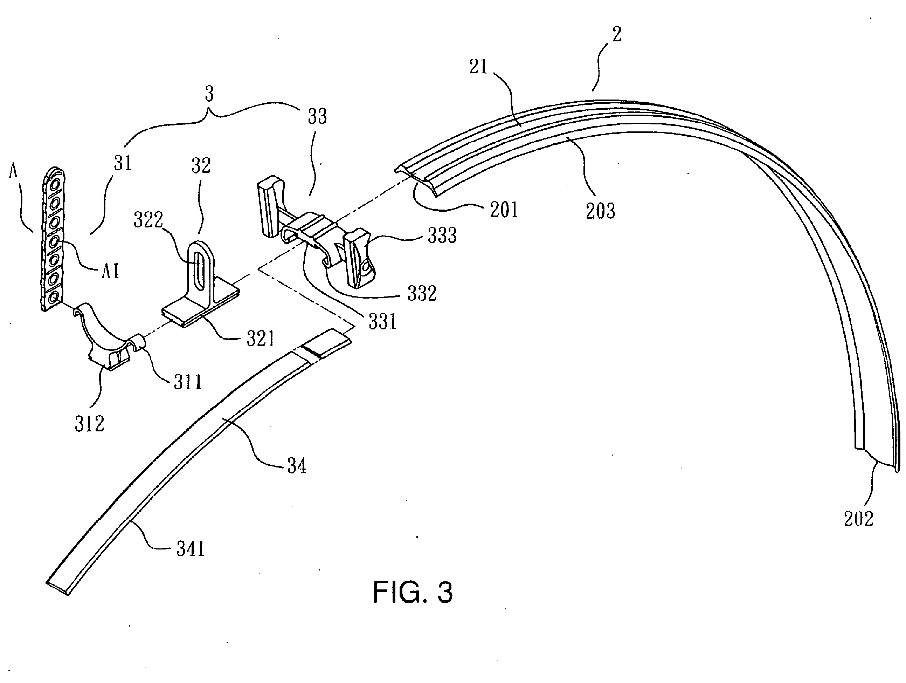

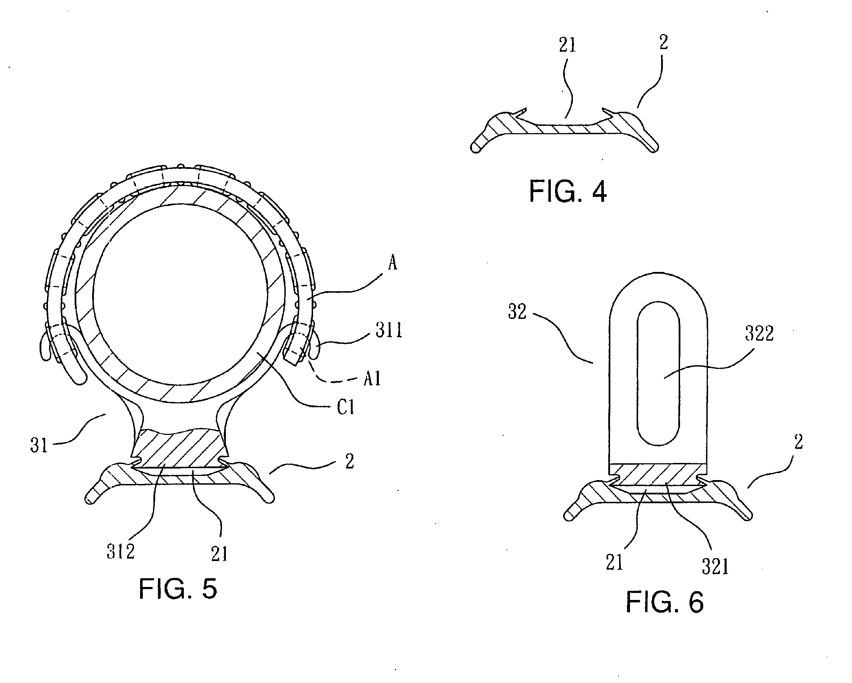

Please referring to FIGS. 2, 3 and 4, the invention includes a fender body 2 and at least one set of fastening element 3. The fender body 2 has at least one longitudinal slide track 21 extended from a first end 201 to a second end 202 thereof. The fastening element 3 includes at least a first member 31, a second member 32 and a third member 33. Each member has retaining portions 312, 321 and 331 that are formed respectively in a cross section to wedge in the cross section of the longitudinal slide track 21, and also to slide thereon to adjust the fastening locations on a bicycle frame C. The longitudinal slide track 21 is formed with a dovetail cross section (referring to FIG. 4).

Referring to FIG. 5, the first member 31 of the fastening member 3 is located close to the first end 201 of the fender body 2 to be fastened to the bicycle frame C. The first member 31 further has a latch hook 311 at each of two sides to be latched on a latch hole A1 formed on a coupling plate A which is wrapped and anchored on a seat tube C1 of the bicycle frame C. The first member 31 also has the first retaining portion 312 formed at the bottom thereof in a dovetail cross section to be wedged in the cross section of the longitudinal slide track 21 to facilitate adjustment at the forward and rearward location.

Referring to FIG. 6, the second member 32 is located between the first end 201 and the second end 202 of the fender body 2, to be fastened to the bicycle frame C, and has the second retaining portion 321 formed at the bottom thereof in a dovetail shape to be wedged in the cross section of the longitudinal slide track 21 to slide forward and rearward to facilitate adjustment of the location. It further has a fastening slot 322 formed thereon.

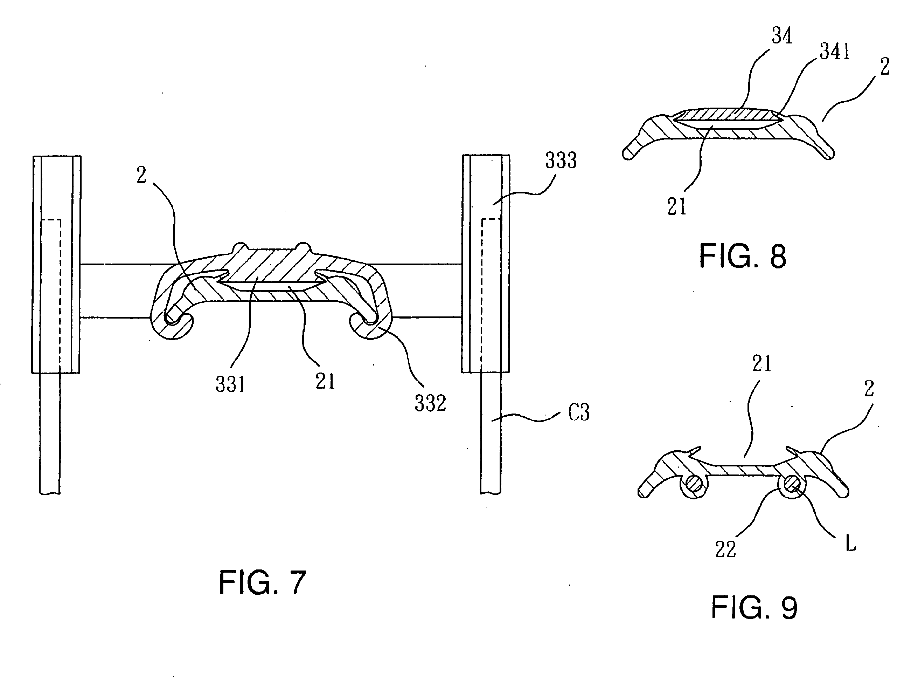

Referring to FIG. 7, the third member 33 is located close to the second end 202 of the fender body 2 to be fastened to a stay C3 of a rear fork C2 of the bicycle frame C. It has the third retaining portion 331 formed in a dovetail shape to be wedged in the cross section of the longitudinal slide track 21 to slide forward and rearward facilitate adjustment of the location. It further has a pair of bent hooks 332 and a pair of anchor seats 333 formed at two sides. The bent hooks 332 latch lateral edges 203 of the fender body 2 to maintain coupling support strength with the fender body 2. The anchor seats 333 are fastened to the stay C3 to support the fender body 2.

Referring to FIG. 8, the longitudinal slide track 21 further is covered by a cover blade 34 on the surface. The cover blade 34 has a fourth retaining portion 341 formed in a shape of a dovetail seat to be wedged in the cross section of the longitudinal slide track 21. It may be a reflective blade or coated with a desired color or pattern, or a solar panel.

By means of the construction set forth above, the retaining portions 312, 321 and 331 of the first, second and third members 31, 32 and 33 can be wedged in the longitudinal slide track 21, and their fastening locations on the bicycle frame C can be adjusted as desired (referring to FIGS. 2, 5, 6 and 7).

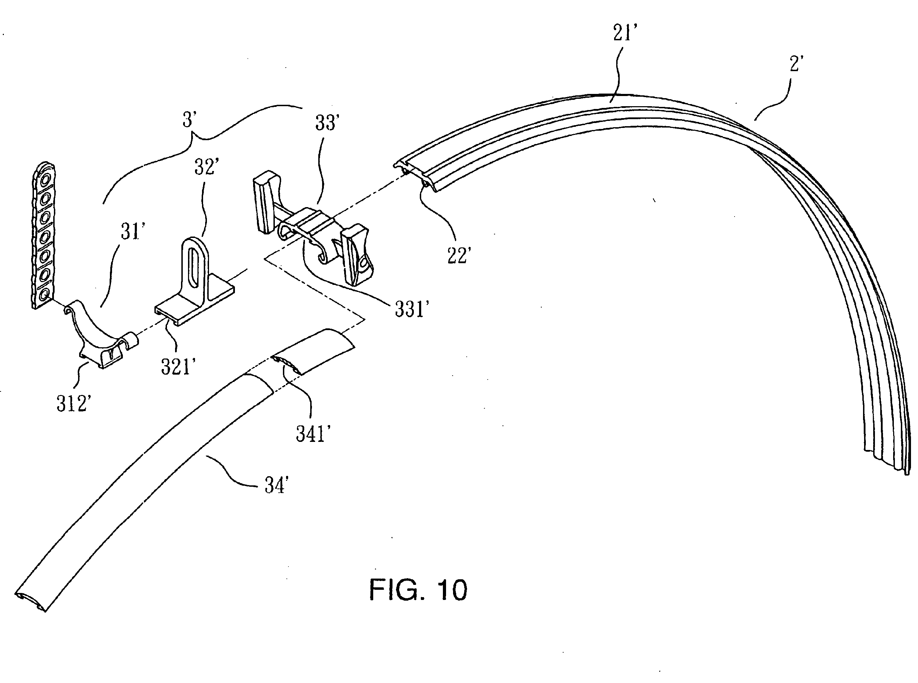

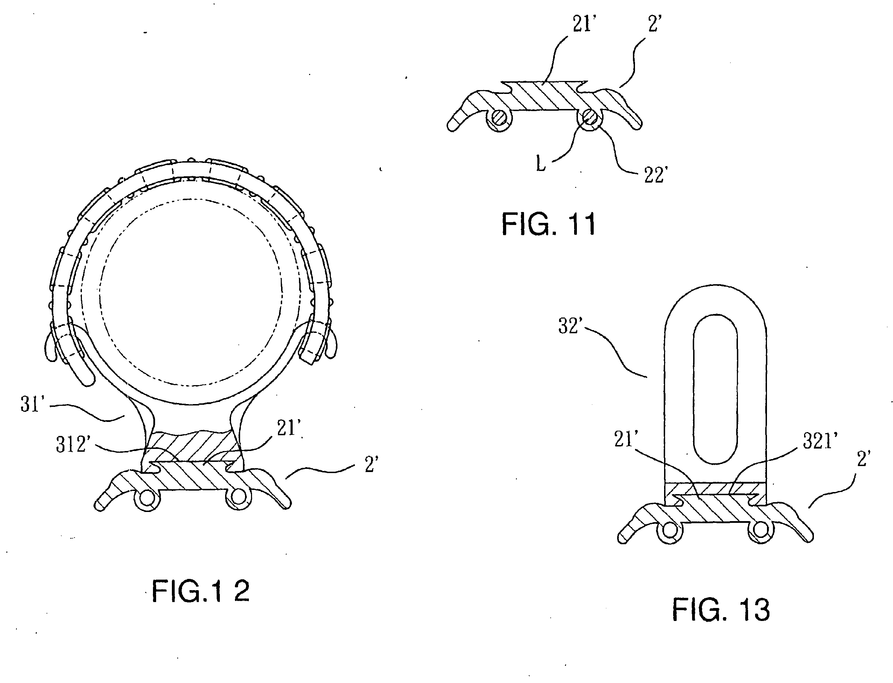

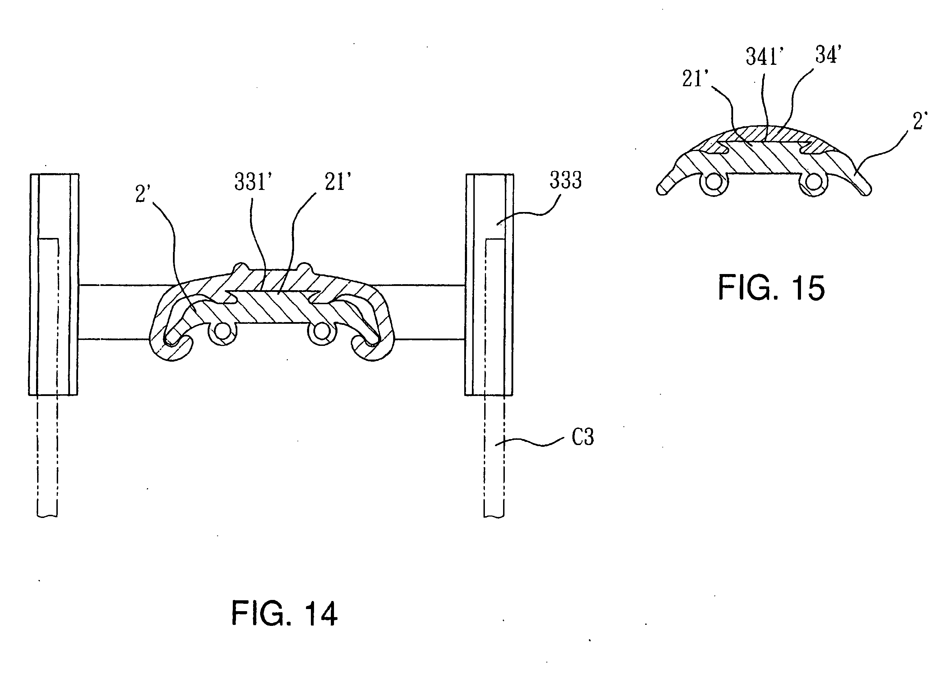

Referring to FIG. 10, the cross section of the slide track 21' of the fender body 2' may also be formed in a shape of a dovetail seat, while the retaining portions 312', 321' and 331' of the first, second and third members 31', 32' and 33' are formed respectively in a dovetail cross section to be wedged in the longitudinal slide track 21' and slid thereon to adjust the locations (referring to FIGS. 10, 12, 13 and 14). Moreover, the fourth retaining portion 341' of the cover blade 34' also is formed a dovetail cross section (referring to FIG. 15).

Referring to FIGS. 9, 10 and 11, the fender bodies 2 and 2' further have at least one wire duct 22 and 22' to hold at least one wire L.

As a conclusion, the invention allows the fastening locations to be adjusted according to different specifications of the bicycle frame. Installation and adjustment are sassier. It provides a significant improvement over the conventional bicycle fenders.

While the preferred embodiments of the invention have been set forth for the purpose of disclosure, modifications of the disclosed embodiments of the invention as well as other embodiments thereof may occur to those skilled in the art.

## Claims

1. A bicycle fender having an adjustable fastening structure comprising a fender body (2) and at least one set of fastening element (3), wherein:
the fender body (2) has at least one longitudinal slide track (21) extended from a first end (201) to a second end (202) of the fender body (2), and
the fastening element (3) has a retaining portion corresponding to and wedging in the longitudinal slide track (21) to slide thereon to adjust a fastening location thereof on a bicycle frame (c).

2. The bicycle fender of claim 1, wherein the fender body (2) further has at least one wire duct to hold a wire.

3. The bicycle fender of claim 1, wherein the longitudinal slide track (21) is formed with a cross section of a dovetail shape.

4. The bicycle fender of claim 1, wherein the longitudinal slide track (21) is formed with a cross section in a shape of a dovetail seat.

5. The bicycle fender of claim 1, wherein the fastening element (3) includes a first member (31) which has a first retaining portion (312) corresponding to and wedging in the longitudinal slide track (21).

6. The bicycle fender of claim 1, wherein the fastening element (3) includes a second member (32) which has a second retaining portion (321) corresponding to and wedging in the longitudinal slide track (21).

7. The bicycle fender of claim 1, wherein the fastening element (3) includes a third member (33) which has a third retaining portion (331) corresponding to and wedging in the longitudinal slide track (21).

8. The bicycle fender of claim 1, wherein the longitudinal slide track (21) is covered by a cover blade (34) which has a fourth retaining portion (341) corresponding to and wedging in the longitudinal slide track (21).

## Patentansprüche

1. Ein Fahrradschutzblech mit einer verstellbaren Befestigungsstruktur, aufweisend einen Schutzblechkörper (2) und mindestens einen Befestigungselementsatz (3), wobei:
der Schutzblechkörper (2) mindestens eine Längsgleitschiene (21) aufweist, die sich von einem ersten Ende (201) zu einem zweiten Ende (202) des Schutzblechkörpers (2) erstreckt, und
das Befestigungselement (3) einen Halteabschnitt aufweist, der mit der Längsgleitschiene (21) korrespondiert und in dieser festgeklemmt ist, um darauf zu gleiten, um eine Befestigungsposition davon an einem Fahrradrahmen (C) zu verstellen.

2. Das Fahrradschutzblech gemäß Anspruch 1, wobei der Schutzblechkörper (2) ferner mindestens eine Kabelführung aufweist, um ein Kabel aufzunehmen.

3. Das Fahrradschutzblech gemäß Anspruch 1, wobei die Längsgleitschiene (21) mit einem schwalbenschwanzförmigen Querschnitt ausgebildet ist.

4. Das Fahrradschutzblech gemäß Anspruch 1, wobei die Längsgleitschiene (21) mit einem Querschnitt in Form einer Schwalbenschwanzaufnahme ausgebildet ist.

5. Das Fahrradschutzblech gemäß Anspruch 1, wobei das Befestigungselement (3) ein erstes Element (31) aufweist, das einen ersten Halteabschnitt (312) aufweist, der mit der Längsgleitschiene (21) korrespondiert und in dieser festgeklemmt ist.

6. Das Fahrradschutzblech gemäß Anspruch 1, wobei das Befestigungselement (3) ein zweites Element (32) aufweist, das einen zweiten Halteabschnitt (321) aufweist, der mit der Längsgleitschiene (21) korrespondiert und in dieser festgeklemmt ist.

7. Das Fahrradschutzblech gemäß Anspruch 1, wobei das Befestigungselement (3) ein drittes Element (33) aufweist, das einen dritten Halteabschnitt (331) aufweist, der mit der Längsgleitschiene (21) korrespondiert und in dieser festgeklemmt ist.

8. Das Fahrradschutzblech gemäß Anspruch 1, wobei die Längsgleitschiene (21) von einem Abdeckblatt (34) bedeckt ist, das einen vierten Halteabschnitt (341) aufweist, der mit der Längsgleitschiene (21) korrespondiert und in dieser festgeklemmt ist.

## Revendications

1. Garde-boue de bicyclette ayant une structure de fixation ajustable comprenant un corps (2) de garde-boue et au moins un ensemble d'élément (3) de fixation, dans lequel :
le corps (2) de garde-boue a au moins un rail (21) de coulissement longitudinal étendu à partir d'une première extrémité (201) vers une seconde extrémité (202) du corps (2) de garde-boue ; et
l'élément (3) de fixation a une partie de retenue correspondant à et se calant dans le rail (21) de coulissement longitudinal pour coulisser sur celui-ci afin d'ajuster son emplacement de fixation sur un cadre (c) de bicyclette.

2. Garde-boue de bicyclette selon la revendication 1, dans lequel le corps (2) de garde-boue a en outre au moins un conduit de fil pour maintenir un fil.

3. Garde-boue de bicyclette selon la revendication 1, dans lequel le rail (21) de coulissement longitudinal est formé avec une section transversale en forme de queue d'aronde.

4. Garde-boue de bicyclette selon la revendication 1, dans lequel le rail (21) de coulissement longitudinal est formé avec une section transversale selon une forme de siège de queue d'aronde.

5. Garde-boue de bicyclette selon la revendication 1, dans lequel l'élément (3) de fixation comprend un premier élément (31) qui a une première partie (312) de retenue correspondant à et se calant dans le rail (21) de coulissement longitudinal.

6. Garde-boue de bicyclette selon la revendication 1, dans lequel l'élément (3) de fixation comprend un second élément (32) qui a une seconde partie (321) de retenue correspondant à et se calant dans le rail (21) de coulissement longitudinal.

7. Garde-boue de bicyclette selon la revendication 1, dans lequel l'élément (3) de fixation comprend un troisième élément (33) qui a une troisième partie (331) de retenue correspondant à et se calant dans le rail (21) de coulissement longitudinal.

8. Garde-boue de bicyclette selon la revendication 1, dans lequel le rail (21) de coulissement longitudinal est recouvert par une aube (34) de recouvrement qui a une quatrième partie (341) de retenue correspondant à et se calant dans le rail (21) de coulissement longitudinal.
